# EUROPÄISCHE PATENTSCHRIFT

(11) **EP 1 466 472 B1**
(45) Veröffentlichungstag und Bekanntmachung des Hinweises auf die Patenterteilung: **25.05.2005**
(21) Anmeldenummer: 03701467.7
(22) Anmeldetag: 02.01.2003
(51) Int. Cl.: H04N 5/232, H01L 31/0203, H04N 5/335

(54) **FOKUSSIERBARE KAMERA**
CAMERA WITH ADJUSTABLE FOCUS
APPAREIL PHOTOGRAPHIQUE A MISE AU POINT REGLABLE

(30) Priorität: 18.01.2002 DE 10201877
(43) Veröffentlichungstag der Anmeldung: 13.10.2004
(73) Patentinhaber: Siemens Aktiengesellschaft, 80333 München (DE)
(72) Erfinder: HERMSEN, Markus, 82194 Gröbenzell (DE)
(86) Internationale Anmeldenummer: PCT/DE2003/000005
(87) Internationale Veröffentlichungsnummer: WO 2003/061276

(56) Entgegenhaltungen:
- US-A- 5 101 278
- PATENT ABSTRACTS OF JAPAN vol. 012, no. 447 (E-685), 24. November 1988 (1988-11-24) & JP 63 173475 A (TOSHIBA CORP), 18. Juli 1988 (1988-07-18)
- PATENT ABSTRACTS OF JAPAN vol. 1995, no. 11, 26. Dezember 1995 (1995-12-26) & JP 07 231080 A (SONY CORP), 29. August 1995 (1995-08-29)
- PATENT ABSTRACTS OF JAPAN vol. 012, no. 231 (P-723), 30. Juni 1988 (1988-06-30) & JP 63 021615 A (MATSUSHITA ELECTRIC IND CO LTD), 29. Januar 1988 (1988-01-29)

## Beschreibung

Die vorliegende Erfindung betrifft eine Kamera, welche bevorzugt in mobilen Endgeräten, wie z.B. Mobilfunkgeräten, eingesetzt werden kann.

Für mobile Endgeräte, wie z.B. Mobilfunkgeräte der dritten Generation, werden miniaturisierte Kameras benötigt.

Bekannte Kameras sind mit einer verstellbaren Linse ausgestattet. Eine verstellbare Linse erfordert eine komplexe, mechanische Verstellvorrichtung. Solche mechanische Vorrichtungen sind jedoch kostenintensiv, relativ groß und anfällig hinsichtlich mechanischen Einwirkungen wie z.B. Stößen und Staub (Abrieb).

Alle herstellerseitig fokussierten Kameras (alle Fix-Fokus Systeme) haben den Nachteil, dass die Fokussierung der Linse während des Zusammenbaus der Kamera kostenintensiv ist. Diese Fokussierung stellt auch die größte Schwachstelle in Punkto Anlieferqualität bei Massenproduktion dar.

Des Weiteren ist es bekannt, bei Kameras Autofokus-Steuerungen einzusetzen, bei denen die Linse zum Fokussieren elektrisch, magnetisch oder durch einen Motor bewegt wird. Solche Steuerungen sind jedoch störanfällig, nicht stabil, benötigen viel Energie und sind platzaufwendig. Bei einer Miniaturisierung der Kamera für mobile Anwendungen ist es jedoch wünschenswert, Autofokus-Funktionalität in die Kamera zu integrieren.

Kameras gemäß dem stand der Technik sind aus JP-A-63 173 475, JP-A-07 231 080 und US-A- 5 101 278 bekannt.

Der vorliegenden Erfindung liegt folglich die Aufgabe zugrunde, eine Kamera bereitzustellen, welche miniaturisiert ausgebildet sein kann, nur geringen Strom verbraucht und dennoch störunanfällig gegenüber mechanischen Einflüssen ist, sowie einen hermetisch staubdichten Aufbau bei niedrigen Gesamtkosten ermöglicht. Darüber hinaus sollte die Kamera zum Einsatz in mobilen Endgeräten auch in ein Gehäuse integrierbar sein, welches ausreichenden Schutz vor Umwelteinflüssen bietet.

Diese Aufgabe wird durch eine Kamera mit den Merkmalen des Anspruchs 1 gelöst. Bevorzugte Ausführungsformen der vorliegenden Erfindung ergeben sich aus den abhängigen Ansprüchen.

Die Kamera weist ein Gehäuse, eine Linse, einen Sensor als Bildebene, ein Piezo-Element zum Bewegen des Sensor und Anschlussmittel zum Kontaktieren des Sensors auf. Das Piezoelement ist unterhalb des Sensors angeordnet und die Linse ist in der Kamera, insbesondere dem Kameragehäuse, fest angebracht.

In einer bevorzugten Ausführungsform der vorliegenden Erfindung wird die Bildebene durch das Piezo-Element zum Fokussieren verschoben. Entgegen bekannten Fokusierungs-Anordnungen erfolgt eine Fokussierung nicht durch ein Verschieben der Linse. Die Linse kann an dem Kameragehäuse fest angebracht sein, wodurch eine Beeinflussung der Linse durch äußere Einwirkungen weitestgehend ausgeschlossen werden kann. Das Gehäuse schützt die Kamera vor Umwelteinflüssen. Dabei kann es sich um Umwelteinflüsse wie z.B. Feuchtigkeit, Stäube, Aerosole, Wind, Strahlung, Elektrostatische Entladungen oder mechanische Erschütterungen handeln.

Zum Fokussieren wird der reziproke Piezo-Effekt des Piezo-Elements genutzt. Wird ein piezoelektrisches Material mit einer Spannung beaufschlagt, so verformt es sich mechanisch. Das Piezo-Element ist unterhalb des Sensors angeordnet. Durch die mechanische Verformung kann der auf dem Piezo-Element aufliegende Sensor, d.h. die Bildebene, parallel zur Linse verschoben werden. Eine Steuerung der Fokusierung ist folglich durch Verschieben der Bildebene in Abhängigkeit von der angelegten Spannung möglich.

Bei der vorliegenden Erfindung kann für die Verschiebung der Bildebene ein Piezo-Element benutzt werden, da nur eine Verschiebung von einigen 10 µm, z. B. ± 50 µm, erforderlich ist. Folglich kann erfindungsgemäß ein Piezo-Element bekannter Zuverlässigkeit, Präzision und Stabilität eingesetzt werden. Piezo-Elemente haben den Vorteil eines nur relativ geringen Stromverbrauchs. Piezoelemente verbrauchen nur dann Strom, wenn die angelegte Spannung geändert wird. Bei konstanter Spannung wird nahezu kein Strom verbraucht. Der Hauptstromverbrauch tritt durch Energieverluste der Spannungswandler auf. Somit bieten sich Piezo-Elemente gerade für mobile Anwendungen an.

Gemäß de Erfindung sind die Anschlussmittel als mindestens eine Flexfolie ausgebildet. Bevorzugt besteht die Flexfolie aus einem Polymid-Substrat mit aufkaschierter Kupferfolie und einer Isolationsschicht aus Polyamid als Deckschicht.

Die Flexfolie ist bevorzugt dünn ausgebildet. Als vorteilhaft erweist sich eine Dicke der Flexfolie kleiner 34 µm.

Bevorzugt ist der Sensor auf dem Anschlussmittel angeordnet.

In einer weiteren Ausführungsform der vorliegenden Erfindung weisen die Anschlussmittel(z.B. eine Flexfolie) zwei elliptische Aussparungen auf. Die Anschlussmittel sind dabei im Randbereich am Gehäuse der Kamera befestigt und im Anschlussbereich mit dem Sensor über dem Piezo-Element angeordnet. Durch die Ausbildung der Anschlussmittel als Flexfolie ist eine kostengünstige und stabile Kontaktierung des Sensors möglich. Darüber hinaus ist auch nach einer Vielzahl von Fokussierungszyklen eine optimale Funktion der Kamera gewährleistet.

In einer weiteren Ausführungsform der vorliegenden Erfindung weist die Kamera einen Infrarot-Filter auf.

Ferner kann die Kamera auch ein Schutzglas über der Linse aufweisen.

In einer Weiterbildung der vorliegenden Erfindung ist die Kamera mit einer Autofokus-Steuerung kombiniert. Die vorliegende Erfindung ermöglicht auch bei miniaturisierten Kameras eine Autofokussierung. Hierzu muß ein entsprechender Algorithmus die Ansteuerung des Piezoelementes übernehmen. Ein derartiger Algorithmus kann z.B. in dem Imageprozessor der Kamera integriert sein.

Die Erfindung wird im Folgenden unter Hinweis auf die beigefügten Zeichnung anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine schematische Darstellung einer beispielhaften Kamera mit Anschlussbond-Drähten;
- Figur 2: eine schematische Darstellung einer erfindungsgemäßen Kamera mit einer Flexverbindung als Anschlussmittel; und
- Figur 3: eine Darstellung einer Flexfolie gemäß der vorliegenden Erfindung.

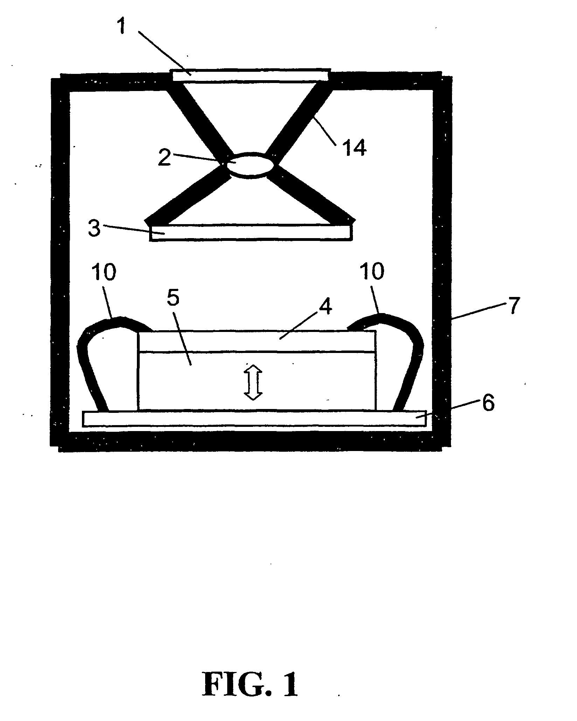

Figur 1 zeigt ein Beispiel einer Kamera. Die Kamera weist eine Schutzglas 1, eine Fokussierungslinse 2 und einen Infrarot-Filter 3 auf. Die Linse 2 ist über eine Gestell 14 mit dem Gehäuse 7 fest verbunden. Die Linse 2 kann nicht verschoben werden. Der Sensor 4 stellt die Bildebene dar. Unter dem Sensor ist das Piezo-Element 5 angeordnet, welches sich auf einer Leiterplatte 6 befindet. Mit Hilfe der Bond-Drähte 10 wird eine Verbindung zwischen dem Sensor 4 und der Leiterplatte 6 bereitgestellt. Durch Anlegen einer Spannung (nicht eingezeichnet) an dem Piezo-Element wird dieses in senkrechter Richtung (wie durch den Pfeil angedeutet) verformt, so dass sich der darauf liegende Sensor, d.h. die Bildebene der Kamera, hebt bzw. senkt. Durch Änderung der Spannung an dem Piezo-Element 5 kann somit eine Fokussierung vorgenommen werden. Die Drähte 10 können dabei an den Sensor 4 gebondet sein.

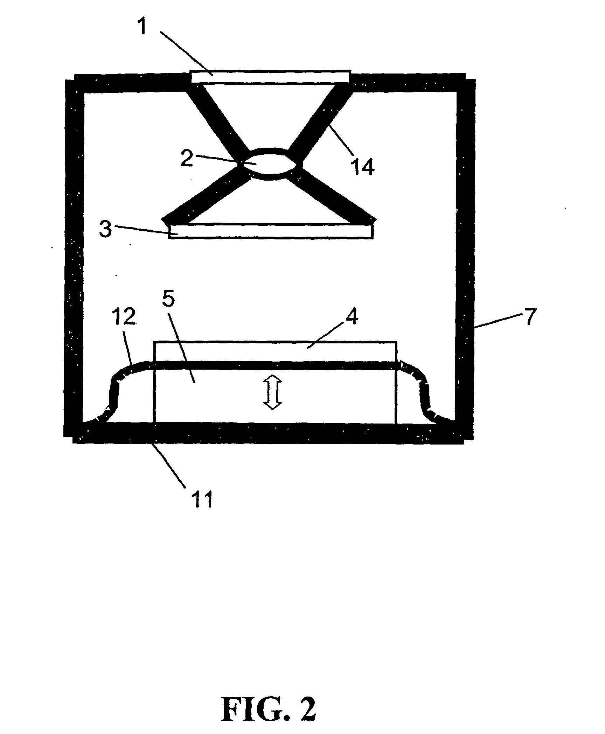

Figur 2 zeigt ein Ausführungsbeispiel der vorliegenden Erfindung. Die Kamera in Figur 2 enthält wiederum eine Schutzglas 1, eine Fokussierungslinse 2 und einen Infrarot-Filter 3. Die Linse 2 ist wiederum fest, über das Gestell 14, mit dem Gehäuse 7 verbunden. Die Kontaktierung des Sensors 4 erfolgt in dem Ausführungsbeispiel gemäß Figur 2 über eine dünne Flexfolie 12. Der Sensor 4 liegt dabei auf der Flexfolie 12 auf. Durch Anlegen einer Spannung (nicht eingezeichnet) an dem Piezo-Element 5 kann der auf der Flexfolie 12 aufliegende Sensor 4, d.h. die Bildebene der Kamera, angehoben bzw. gesenkt werden. Eine Fokussierung ist somit in Abhängigkeit von der angelegten Spannung möglich.

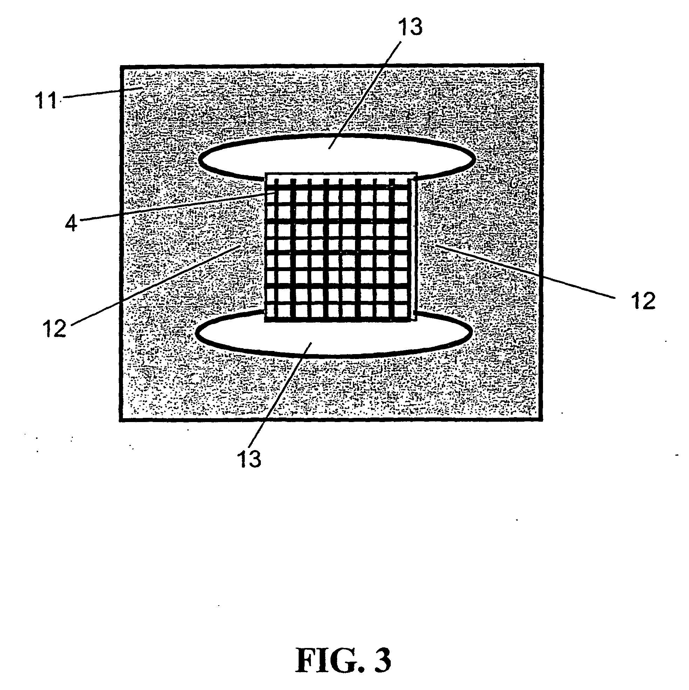

Figur 3 zeigt in Draufsicht das erfindungsgemäße Layout einer Flexfolie gemäß Figur 2. Der Sensor 4 liegt im zentralen Bereich der Flexfolie 11 auf dieser auf. Die Flexfolie weist zwei elliptisch ausgebildete Aussparungen 13 auf. Im Bereich der Anschlussenden 12 der Flexfolie 11, d.h. unter dem Sensor 4, befindet sich (in der Figur 3 nicht ersichtlich) das Piezo-Element. Im Randbereich der Flexfolie 11, d.h. um die Aussparungen 13 herum, ist die Flexfolie 11 mit der Unterseite des Gehäuses 7 verbunden. Die elliptische Ausbildung der Aussparungen 13 ist dabei nicht zwingend.

Bei allen Ausführungsformen ist es denkbar, dass die Schutzgläser oberhalb der Linse und/oder je nach System auch die Infrarot Sperrfilter entfallen.

Durch die vorliegende Erfindung ist es möglich, eine Fokusanpassung in einer weitestgehend vor Umwelteinflüssen geschützten Kamera bereitzustellen. Die Größe bekannter Miniatur-Kameras kann dabei beibehalten werden, wodurch sich das Anwendungsfeld von Kameras erhöht.

Darüber hinaus ergeben sich Vorteile beim Zusammenbau der Kamera, da keine präzisen Feinabstimmungstoleranzen für die Anordnung der Linse notwendig sind. Eine relativ grobe Abstimmung der Linse ist ausreichend. Die richtige Fokussierung kann durch den Nutzer der Kamera manuell vorgenommen werden.

Dies hat einen erheblichen Einfluß auf die Fertigungskosten einer solchen Kamera in der Serienproduktion.

Des weiteren läßt sich mit einem solchen System eine Temperaturkompensation der Fokuseinstellung realisieren. Konventionelle Kamerakonstruktionen müssen den Einfluß der unterschiedlichen Arbeitstemperaturen in der Gehäusekonstruktion berücksichtigen. Dies kann nur begrenzt oder mit erheblichem Aufwand geschehen. Somit lassen sich durch die vorliegende Erfindung die Kosten eines Kameramoduls reduzieren.

Die vorliegende Erfindung kann grundsätzlich mit jeder Art von Autofokus-Steuerung kombiniert werden, so dass eine Autofokus-Funktionalität bereitgestellt wird. Verglichen mit bekannten Autofokus-Konzepten ist durch die vorliegende Erfindung ein besserer Schutz vor Staub möglich.

## Patentansprüche

1. Miniaturisiert ausgebildete Kamera mit einem Gehäuse (7) aufweisend:
- eine Linse (2);
- einen Sensor (4) als Bildelement;
- ein Piezo-Element (5) zum Bewegen des Sensors, wobei das Piezo-Element unterhalb des Sensors angeordnet ist;
- Anschlussmittel (10, 11, 12) zum Kontaktieren des Sensors,
**dadurch gekennzeichnet, dass** die Linse (2) in der Kamera, insbesondere in dem Kameragehäuse, fest angebracht ist, und die Anschlussmittel als mindestens eine Flexfolie (11, 12) ausgebildet sind und zwei Aussparungen (13) aufweisen.

2. Kamera nach Anspruch 1,
**dadurch gekennzeichnet, dass** die Bildebene durch das Piezo-Element zum Fokussieren verschoben wird.

3. Kamera nach Anspruch 1 oder 2,
**dadurch gekennzeichnet, dass** die Flexfolie dünn ausgebildet ist.

4. Kamera nach einem der Ansprüche 1, 2 oder 3,
**dadurch gekennzeichnet, dass** der Sensor auf dem Anschlussmittel angeordnet ist.

5. Kamera nach Anspruch 1, 2, 3 oder 4,
**dadurch gekennzeichnet, dass** die Aussparungen (13) elliptisch ausgebildet sind.

6. Kamera nach einem der Ansprüche 1 bis 5,
**dadurch gekennzeichnet, dass** die Anschlussmittel im Randbereich am Gehäuse der Kamera befestigt sind.

7. Kamera nach einem der Ansprüche 1 bis 6,
**dadurch gekennzeichnet, dass** die Anschlussmittel im Anschlussbereich mit dem Sensor (4) über dem Piezo-Element angeordnet sind.

8. Kamera nach einem der Ansprüche 1 bis 7,
**dadurch gekennzeichnet, dass** die Anschlussmittel so ausgebildet sind, dass eine Bewegung des Sensors parallel zur Linse möglich ist.

9. Kamera nach einem der vorhergehenden Ansprüche,
**dadurch gekennzeichnet, dass** die Kamera einen Infrarot-Filter (3) aufweist.

10. Kamera nach einem der vorhergehenden Ansprüche,
**dadurch gekennzeichnet, dass** die Kamera ein Schutzglas (1) über der Linse aufweist.

11. Kamera nach einem der vorhergehenden Ansprüche,
**dadurch gekennzeichnet, dass** das Gehäuse (7) die Kamera vor Umwelteinflüssen schützt.

12. Kamera nach einem der vorhergehenden Ansprüche,
**dadurch gekennzeichnet, dass** die Kamera mit einer Autofokus-Steuerung kombiniert ist.

## Claims

1. Camera with a housing (7) featuring:
- a lens (2);
- a sensor (4) as a picture element;
- a piezo element (5) for displacing the sensor, in which case the piezo element is arranged below the sensor;
- connecting elements (10, 11, 12) for making contact with the sensor,
**characterized in that** the lens (2) is mounted in the camera, especially in the camera housing, in a fixed manner.

2. Camera in accordance with Claim 1,
**characterized in that** the focal plane is displaced by the piezo element for focusing.

3. Camera in accordance with Claims 1 or 2,
**characterized in that** the flex foil is a thin design.

4. Camera in accordance with one of the Claims 1, 2 or 3,
**characterized in that** the sensor is arranged on the connecting elements.

5. Camera in accordance with one of the Claims 1, 2, 3 or 4,
**characterized in that** the connecting elements feature two cutouts (13).

6. Camera in accordance with one of the Claims 1 to 5,
**characterized in that** the connecting elements are attached in the edge area to the housing of the camera.

7. Camera in accordance with one of the Claims 1 to 6,
**characterized in that** the connecting elements are arranged in the connecting area with the sensor (4) over the piezo element.

8. Camera in accordance with one of the Claims 1 to 7,
**characterized in that** the connecting elements are embodied so that it is possible to move the sensor in parallel to the lens.

9. Camera in accordance with one of the previous claims,
**characterized in that** the camera features an infrared filter (3)

10. Camera in accordance with one of the previous claims
**characterized in that** the camera features a protective glass cover (1) over the lens.

11. Camera in accordance with one of the previous claims,
**characterized in that** the housing (7) protects the camera against environmental effects.

12. Camera in accordance with one of the previous claims,
**characterized in that** the camera is combined with an autofocus control.

## Revendications

1. Appareil photographique/caméra réalisé sous forme miniaturisée, avec un boîtier (7) comprenant:
- une lentille (2),
- un capteur (4) en tant que plan focal,
- un élément piézo (5) pour déplacer le capteur, l'élément piézo étant situé en dessous du capteur,
- des moyens de raccordement (10, 11, 12) pour établir le contact avec le capteur,
**caractérisé en ce que** la lentille (2) est montée de manière fixe dans l'appareil photographique/la caméra, et plus particulièrement dans le boîtier de l'appareil photographique/la caméra, et les moyens de raccordement sont réalisés sous la forme d'au moins une feuille flexible (11, 12) et présentent deux évidements (13).

2. Appareil photographique/caméra selon la revendication 1,
**caractérisé en ce que** le plan focal est déplacé par l'élément piézo aux fins de la focalisation.

3. Appareil photographique/caméra selon la revendication 1 ou 2,
**caractérisé en ce que** la feuille flexible est réalisée de manière à être mince.

4. Appareil photographique/caméra selon l'une des revendications 1, 2 ou 3,
**caractérisé en ce que** le capteur est situé sur le moyen de raccordement.

5. Appareil photographique/caméra selon l'une des revendications 1, 2, 3 ou 4,
**caractérisé en ce que** les évidements (13) sont réalisés de manière elliptique.

6. Appareil photographique/caméra selon l'une des revendications 1 à 5,
**caractérisé en ce que** les moyens de raccordement sont fixés sur le boîtier de l'appareil photographique/la caméra au niveau du bord.

7. Appareil photographique/caméra selon l'une des revendications 1 à 6,
**caractérisé en ce que** les moyens de raccordement sont situés dans la zone de raccordement avec le capteur (4) au-dessus de l'élément piézo.

8. Appareil photographique/caméra selon l'une des revendications 1 à 7,
**caractérisé en ce que** les moyens de raccordement sont réalisés de manière telle qu'un déplacement du capteur parallèlement à la lentille est possible.

9. Appareil photographique/caméra selon l'une des revendications précédentes,
**caractérisé en ce que** l'appareil photographique/la caméra comporte un filtre infrarouge (3).

10. Appareil photographique/caméra selon l'une des revendications précédentes,
**caractérisé en ce que** l'appareil photographique/la caméra comporte un verre de protection (1) au-dessus de la lentille.

11. Appareil photographique/caméra selon l'une des revendications précédentes,
**caractérisé en ce que** le boîtier (7) protège l'appareil photographique/la caméra contre des influences environnementales.

12. Appareil photographique/caméra selon l'une des revendications précédentes,
**caractérisé en ce que** l'appareil photographique/la caméra est combiné à une commande de focalisation automatique.
